# EUROPEAN PATENT SPECIFICATION

(11) **EP 1 721 869 B1**
(45) Date of publication and mention of the grant of the patent: **15.06.2011**
(21) Application number: 05719965.5
(22) Date of filing: 25.02.2005
(51) Int. Cl.: C02F 1/52, C02F 1/56, B01D 21/01, D21F 1/66, D21H 17/68, D21H 21/10

(54) **METHOD FOR TREATING PAPERMAKING WASTE WATER AND METHOD FOR UTILIZING SILICA SOL IN PAPERMAKING**
VERFAHREN ZUR BEHANDLUNG VON ABWASSER AUS DER PAPIERHERSTELLUNG UND VERFAHREN ZUR VERWENDUNG VON KIESELSOL BEI DER PAPIERHERSTELLUNG
PROCEDE DE TRAITEMENT DES EAUX USEES DE FABRICATION DE PAPIER ET PROCEDE DE UTILISATION DU SOL DE SILICE DANS LA FABRICATION DE PAPIER

(30) Priority: 02.03.2004 JP 2004058142
(43) Date of publication of application: 15.11.2006
(73) Proprietor: Tokuyama Corporation, Shunan-shi, Yamaguchi 745-0053 (JP)
(72) Inventor: KOGA, Yoshiaki, Tokuyama Corporation, Shunan-shi, Yamaguchi 745-0053 (JP); MUNEMASA, Kazuhiko, Tokuyama Corporation, Shunan-shi, Yamaguchi 745-0053 (JP)
(74) Representative: Albrecht, Thomas
(86) International application number: PCT/JP2005/003684
(87) International publication number: WO 2005/082789

(56) References cited:
- WO-A1-98/56715
- JP-A- 3 157 107
- JP-A- 3 293 003
- JP-A- 4 045 900
- JP-A- 7 251 181
- JP-A- 11 057 740
- JP-A- 54 075 157
- JP-A- 2002 526 680
- JP-A- 2003 038 908

## Description

### Technical Field

The present invention relates to a novel method for treating papermaking waste water and novel methods of using silica sol in papermaking. More specifically, it relates to a method for treating papermaking waste water by use of a specific silica-aluminum based inorganic polymer flocculant and a specific organic polymer flocculant, and methods of using silica sol in papermaking, i.e., using silica sol as a retention aid for improving a papermaking productivity and using a silica-aluminum based inorganic polymer flocculant produced by adding aluminum sulfate to silica sol in order to flocculate papermaking waste water.

### Background Art

Papermaking waste water discharged in paper mills, e. g. , recycled pulp manufacturing waste water which is discharged in manufacturing recycled pulp, kraft pulp manufacturing waste water which is discharged in manufacturing kraft pulp (KP), mechanical pulp manufacturing waste water which is discharged in manufacturing mechanical pulp, coating waste water which is discharged in coating paper with a coating material, and papermaking waste water which is discharged in papermaking pulp, contain fibers, fillers, pigments and the like in a suspended state.

As a method for treating papermaking waste water as described above, a method comprising treating the papermaking waste water by adding an inorganic flocculant such as aluminum sulfate or polyaluminum chlorides to the papermaking waste water to flocculate the suspended materials is generally known.

However, when the inorganic flocculant such as aluminum sulfate is used in treating the papermaking waste water, the amount of the inorganic flocculant to be added must be increased since its power to flocculate the suspended materials is low, and since fine suspended materials remain, it is difficult to reduce the turbidity of the water which has been subjected to the flocculation treatment to such an extent that the treated water can be recycled in a papermaking process. Further, when a chloride such as polyaluminum chlorides is used as an inorganic flocculant, the concentration of chlorine in the flocculated precipitate becomes high, thereby making it difficult to treat and dispose the precipitate.

Meanwhile, a method for treating papermaking waste water by use of an inorganic flocculant and an organic polymer flocculant in combination is also known (refer to JP-A 5-302291 (the term "JP-A" as used herein means an "unexamined published Japanese patent application")).

However, even with the method described in JP-A 5-302291, the turbidity cannot be reduced to a sufficient extent. Accordingly, a method which can achieve a higher degree of flocculation has been desired.

### Disclosure of the Invention

Thus, an object of the present invention is to provide a method for treating papermaking waste water that can achieve a high degree of flocculation of suspended materials in papermaking waste water and reduce the turbidity of the treated water from which the flocculated precipitate has been separated to a very low level so that the treated water can be recycled and that can recycle the flocculated precipitate as a valuable resource which is effectively used as a raw material and fuel for cement or for bioelectric power generation. Further, another object of the present invention is to provide a method of using silica sol that can produce silica sol which is used both in a retention aid and in a flocculant used for treatment of papermaking waste water in the same process by producing a silica-aluminum based inorganic polymer flocculant from silica sol which is used in a retention aid for improving a papermaking productivity.

The present inventors have made intensive studies to solve the above problems. As a result, they have found that the above objects can be achieved by treating papermaking waste water by use of a silica-aluminum based inorganic polymer flocculant having a specific composition. They have completed the present invention based on this finding.

That is, the present invention relates to a method for treating papermaking waste water, which comprises having a silica-aluminum based inorganic polymer flocculant having an Si/Al molar ratio of 0. 2 to 1. 5 contained in papermaking waste water having a pH or adjusted pH of 5 to 14 such that the concentration of the inorganic polymer flocculant becomes 1 to 250 (mg-Al/L) in terms of aluminum so as to control the pH of the above papermaking waste water to 5 to 8 and then adding an organic polymer flocculant.

Further, the present invention relates to a method of using silica sol in papermaking that uses silica sol produced by reacting a sodium silicate solution with a halogen-free mineral acid as a retention aid for improving a papermaking productivity and uses a silica-aluminum based polymer flocculant with an Si/Al molar ratio of 0.2 to 1.5 produced by adding aluminum sulfate to the silica sol as a flocculant for papermaking waste water.

### Brief Description of the Drawings

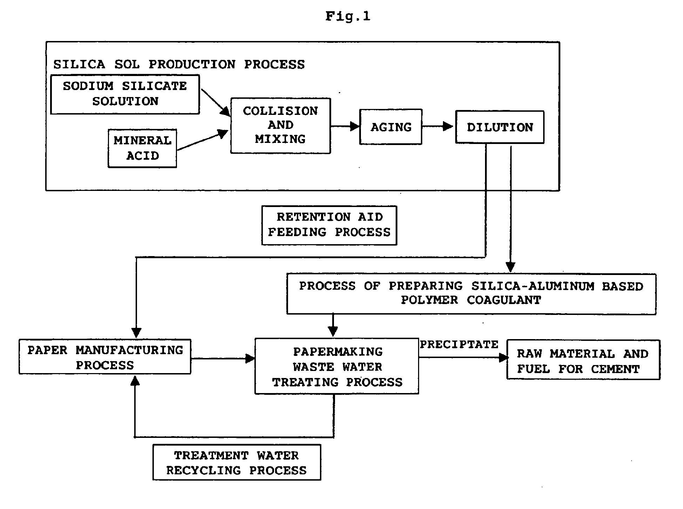

Fig. 1 is a process drawing including the method of using silica sol according to the present invention.

### Best Mode for Carrying out the Invention

Hereinafter, the present invention will be described in detail.

In the present invention, papermaking waste water refers to recycled pulp manufacturing waste water which is discharged in manufacturing recycled pulp, kraft pulp manufacturing waste water which is discharged in manufacturing kraft pulp (KP), mechanical pulp manufacturing waste water which is discharged in manufacturing mechanical pulp, coating waste water which is discharged in coating paper with a coating material, papermaking waste water which is discharged in papermaking pulp, bleaching waste water which is discharged upon bleaching with chlorine, and the like. Further, the papermaking waste water of the present invention may be activated sludge treated waste water resulting from treating the above papermaking waste water with activated sludge, clarifier treated waste water which is the supernatant liquid of the activated sludge treated waste water, and waste water resulting from further treating the activated sludge treated waste water with aluminum sulfate or the like. The above papermaking waste water generally contains suspended materials such as fibers, fillers and pigments and has a turbidity of around 20 to 3,000 when kaolin is a reference material.

In the present invention, papermaking waste water to be treated has a pH of 5 to 14. When papermaking waste water has a pH of 5 to 14, a silica-aluminum based inorganic polymer flocculant can be contained in the papermaking waste water according to the amounts and kinds of suspended materials in the papermaking waste water. It is also possible that the silica-aluminum based inorganic polymer flocculant is contained after the pH is adjusted by a halogen-free mineral acid or an alkali so that the pH is kept within the range of 5 to 14.

Further, in the present invention, when papermaking waste water having a pH of 5 or less is treated, it is necessary to have a silica-aluminum based inorganic polymer flocculant contained in papermaking waste water having its pH adjusted to 5 to 14 in advance by addition of alkali. By having the papermaking waste water to be treated have a pH of 5 or more, control of the pH of the papermaking waste water is facilitated by containing the silica-aluminum based inorganic polymer flocculant. Particularly, by adding a silica-aluminum based inorganic polymer flocculant having a pH of 1. 5 to 2.5, control of the pH of the papermaking waste water to 5 to 8 is facilitated, and the operation of further controlling the pH after addition of the inorganic polymer flocculant can be omitted.

In the present invention, when the pH of papermaking waste water to be treated needs to be adjusted in advance, a halogen-free mineral acid or an alkali is added to the papermaking waste water. Illustrative examples of the halogen-free mineral acid include sulfuric acid. When a halogen-containing mineral acid is used, the content of halogen in a precipitate resulting from treating papermaking waste water is so high that the precipitate cannot be used as a valuable resource such as a raw material and fuel for cement disadvantageously. Meanwhile, illustrative examples of the alkali include sodium hydroxide and lime milk.

In the present invention, by having a silica-aluminum based inorganic polymer flocculant having an Si/Al molar ratio of 0.2 to 1.5 contained in papermaking waste water having a pH of 5 to 14 or papermaking waste water (hereinafter referred to as "pH-adjusted papermaking waste water") having an adjusted pH of 5 to 14, flocculation ability can be enhanced, and a treatment water having low turbidity can be obtained.

In the present invention, the silica-aluminum based inorganic polymer flocculant is a complex that comprises silica sol which is a polymer and aluminum. By use of this silica-aluminum based inorganic polymer flocculant, an effect of lowering turbidity can be exerted prominently.

Further, by use of the silica-aluminum based inorganic polymer flocculant, silica and aluminum are contained in a precipitate resulting from treating papermaking waste water in large quantities, so that the precipitate can be effectively used as a raw material and fuel for cement easily.

Meanwhile, when a silica-iron based inorganic polymer flocculant is used, treated papermaking waste water is colored by iron ions, so that the treatment water just has to be disposed after a flocculated precipitate is separated therefrom and the treatment water cannot be effectively used accordingly.

The above silica-aluminum based inorganic polymer flocculant in the present invention has an Si/Al molar ratio of 0.2 to 1.5. When the Si/Al molar ratio is lower than 0.2 or higher than 1.5, the flocculant cannot lower the turbidity of treatment water to a sufficient extent disadvantageously.

The above silica-aluminum based inorganic polymer flocculant having an Si/Al molar ratio of 0.2 to 1.5 can be prepared by, for example, reacting a sodium silicate solution with a halogen-free mineral acid to produce silica sol and adding aluminum sulfate to the silica sol.

To obtain a silica-aluminum based inorganic polymer flocculant which exhibits excellent effects, it is preferred that aluminum sulfate be added to silica sol after production of the silica sol by such a method as described in JP-A 2003-221222, for example.

That is, a method is preferred that comprises having a sodium silicate solution and a halogen-free mineral acid such as sulfuric acid collide with each other by use of a Y- or T-shaped reactor to obtain a mixture, aging the mixture, diluting the aged mixture to produce silica sol and adding aluminum sulfate to the silica sol to produce a silica-aluminum based inorganic polymer flocculant. The above aging causes polymerization to generate a silica sol in the mixture containing the silica sol.

The diluted silica sol which is an intermediate product in the above method can also be used as a retention aid for improving a papermaking productivity. In this case, silica sol having an SiO₂ concentration of 10 to 30 g/L and a viscosity measured at 25°C of 3 to 6 mPa·s is preferably used. When this silica sol is used as a retention aid for improving a papermaking productivity, it can be used in combination with a known cationic or nonionic polymer flocculant, starch or the like.

In the present invention, the above silica-aluminum based inorganic polymer flocculant is preferably one having a pH of 1.5 to 2.5 and an SiO₂ concentration of 5 to 25 g/L since the pH and the SiO₂ concentration are balanced. Further, the viscosity of the above silica-aluminum based inorganic polymer flocculant is preferably 1 to 5 mPa·s.

By preparing a silica-aluminum based inorganic polymer flocculant having an Si/Al molar ratio of 0.2 to 1.5 by use of the above silica sol having a viscosity of 3 to 6 mPa·s, a silica-aluminum based inorganic polymer flocculant showing a high degree of polymerization and having an increased number of beadlike structures can be prepared efficiently in a short time.

Further, the above silica-aluminum based inorganic polymer flocculant comprises nanoparticles. Thus, it can enhance an effect of flocculating fine pulp fibers and fine particles. Further, it is assumed that since the above silica-aluminum based inorganic polymer flocculant exerts an effect of adsorbing pulp fibers and the like by Al³⁺ and the like and an effect of flocculating and precipitating fine particles and the like by silica simultaneously, it can exert better effects than a system in which silica sol and aluminum sulfate are added separately.

In the present invention, it is important to have a silica-aluminum based inorganic polymer flocculant having an Si/Al molar ratio of 0.2 to 1.5 contained in papermaking waste water or pH-adjusted papermaking waste water having a pH of 5 to 14 such that the concentration of the inorganic polymer flocculant is 1 to 250 (mg-Al/L) in terms of aluminum. When the concentration of the inorganic polymer flocculant is lower than 1 (mg-Al/L) in terms of aluminum, the flocculant cannot lower the turbidity of the papermaking waste water to a sufficient extent disadvantageously. Meanwhile, when it is higher than 250 (mg-Al/L), the silica-aluminum based inorganic polymer flocculant is used in an excessive amount which is uneconomical and undesirable. In consideration of the effect of lowering the turbidity and economical efficiency, the concentration of the silica-aluminum based inorganic polymer flocculant is preferably 1.5 to 230 (mg-Al/L), more preferably 2.0 to 200 (mg-Al/L), in terms of aluminum.

Further, in the present invention, the pH of papermaking waste water (hereinafter may be referred to as "waste water to be treated") containing the silica-aluminum based inorganic polymer flocculant in the above concentration rage must be controlled to 5 to 8.

When the waste water to be treated which contains the silica-aluminum based inorganic polymer flocculant has a pH of less than 5 or more than 8, flocculation efficiency cannot be improved sufficiently and turbidity is not lowered even if an organic polymer flocculant to be described later is added, so that the objects of the present invention cannot be achieved.

In the present invention, to control the pH of waste water to be treated to 5 to 8, which contains the above silica-aluminum based inorganic polymer flocculant, a method of controlling the pH of papermaking waste water or pH-adjusted papermaking waste water having a pH of 5 to 14 by adding the silica-aluminum based inorganic polymer flocculant to the waste water or a method of controlling the pH by adding the silica-aluminum based inorganic polymer flocculant first and then adding a halogen-free mineral acid or an alkali can be employed. That is, when the pH of waste water to be treated which contains the silica-aluminum based inorganic polymer flocculant is 5 to 8, an organic polymer flocculant can be added either directly or after a halogen-free mineral acid or an alkali is added with the pH of the waste water to be treated kept within the range of 5 to 8. Further, when the pH of waste water to be treated is out of the range of 5 to 8 even if the silica-aluminum based inorganic polymer flocculant is added thereto, an organic polymer flocculant can be added after the pH is controlled to 5 to 8 by adding a halogen-free mineral acid or an alkali.

Particularly, to treat a large amount of papermaking waste water and simplify the process, it is preferable that the silica-aluminum based inorganic polymer flocculant be added to papermaking waste water or pH-adjusted papermaking waste water having a pH of 5 to 14 to control the pH of the waste water to be treated to 5 to 8. That is, it is preferable that the pH of the waste water to be treated be controlled to 5 to 8 by merely adding the silica-aluminum based inorganic polymer flocculant.

More specifically, methods of controlling the pH of waste water to be treated to 5 to 8 by merely adding a silica-aluminum based inorganic polymer flocculant having an Si/Al molar ratio of 0.2 to 1.5 to the papermaking waste water or pH-adjusted papermaking waste water having a pH of 5 to 14 are as follows.
(1) When the pH of papermaking waste water is 5 to 14, a silica-aluminum based inorganic polymer flocculant having an Si/Al molar ratio of 0.2 to 1.5 is added to the papermaking waste water to be treated or papermaking waste water having its pH adjusted to 5 to 14 by a halogen-free mineral acid or an alkali according to the amounts and kinds of suspended materials in the papermaking waste water to control the pH of the waste water to be treated to 5 to 8. In this case, the pH of the waste water to be treated after the silica-aluminum based inorganic polymer flocculant is added preferably becomes lower than that before the inorganic polymer flocculant is added.
(2) When the pH of papermaking waste water is less than 5, a silica-aluminum based inorganic polymer flocculant having an Si/Al molar ratio of 0.2 to 1.5 is added to the papermaking waste water to be treated or papermaking waste water having its pH adjusted to 5 to 14 by an alkali according to the amounts and kinds of suspended materials in the papermaking waste water to control the pH of the waste water to be treated to 5 to 8. In this case as well, the pH of the pH-adjusted papermaking waste water after the silica-aluminum based inorganic polymer flocculant is added preferably becomes lower than that before the inorganic polymer flocculant is added.

In the above method (1) or (2), when the pH of the waste water to be treated is controlled to 5 to 8 by addition of the silica-aluminum based inorganic polymer flocculant, the optimal pH of the papermaking waste water or pH-adjusted papermaking waste water having a pH of 5 to 14 is preferably determined by conducting a test in advance by use of a small amount of the papermaking waste water, since the optimal pH varies according to the amounts and kinds of suspended materials in the papermaking waste water, the concentration of the silica-aluminum based inorganic polymer flocculant, an Si/Al molar ratio and the like. The silica-aluminum based inorganic polymer flocculant is added to papermaking waste water or pH-adjusted papermaking waste water whose optimal pH has been determined by conducting a test in advance such that the concentration of the inorganic polymer flocculant becomes 1 to 250 (mg-Al/L) in terms of aluminum to control the pH of the waste water to be treated to 5 to 8. By employing such a method, the flocculation efficiency of the silica-aluminum based inorganic polymer flocculant can be improved, and the process of controlling the pH of the waste water to be treated can be simplified.

In the present invention, an organic polymer flocculant is further added to the above waste water to be treated which has a pH of 5 to 8 and contains the silica-aluminum based inorganic polymer flocculant having an Si/Al molar ratio of 0.2 to 1.5. The efficiency of the flocculation treatment can be improved by further adding the organic polymer flocculant.

Known organic polymer flocculants can be used in the present invention. For example, cationic polymer flocculants such as cationized polyacrylamide, dimethylaminoethyl polyacrylate, dimethylaminoethyl polymethacrylate, polyethylene imine and chitosan; nonionic polymer flocculants such as polyacrylamide; and polyacrylic aid or polyacrylamide based anionic polymer flocculants such as a copolymer of acrylamide and acrylic acid and salts thereof, and anionic polymer flocculants such as polyacrylamide having a sulfone group or the like incorporated therein, can be used. Of these, the polyacrylamide based anionic polymer flocculants and the nonionic polymer flocculants such as polyacrylamide are preferably used.

Further, the amount of the organic polymer flocculant to be added is adjusted as appropriate according to the kinds and characteristics of papermaking waste water and the organic polymer flocculant. The organic polymer flocculant is added to the above waste water to be treated which has a controlled pH of 5 to 8 in such an amount that the concentration of the organic polymer flocculant preferably becomes 0.1 to 10 (mg/L).

In the present invention, known methods can be used to separate a flocculated precipitate after the above organic polymer flocculant is added. Specific examples of the methods include decantation, a filter press, centrifugation, a belt filter, a multiple-disc dehydrator, and a screw press.

In the present invention, when a large quantity of papermaking waste water is treated, it is preferably treated after optimum treatment conditions, i.e., the optimal pH of papermaking waste water or pH-adjusted papermaking waste water, the amount to be added of the silica-aluminum based inorganic polymer flocculant and the amount to be added of the organic polymer flocculant, are found out in advance by use of a small amount of the papermaking waste water, because the amounts and kinds of suspended materials in the papermaking waste water are different according to individual papermaking waste waters.

In the present invention, the turbidity measured by the following measurement method of treatment water resulting from removing the flocculated precipitate from the papermaking waste water or pH-adjusted papermaking waste water can be 8 or lower, preferably 7 or lower, more preferably 6 or lower. Thus, the above treatment water from which the flocculated precipitate has been removed can be recycled in a paper manufacturing process because its turbidity is very low.

Further, in the present invention, the flocculated precipitate has low chlorine concentration and contains aluminum and silica. Thus, it can be recycled as a valuable resource which is effectively used as a raw material and fuel for cement or for bioelectric power generation.

A preferred embodiment of the method of using silica sol according to the present invention is shown in Fig. 1. By using a portion of silica sol obtained in the silica sol production process as a retention aid for improving a papermaking productivity, silica sol usable in both the paper manufacturing process and the papermaking waste water treatment process can be produced in the same process. Thus, equipment can be used effectively. Further, the equipment can be used more effectively if aluminum sulfate used in the paper manufacturing process is also used in the flocculant preparation process.

### Examples

Hereinafter, the present invention will be further described with reference to Examples. The present invention shall not be limited to these Examples.

Measured values presented in Examples and Comparative Examples were measured in the following manners.

### 1) Turbidity (reference material: kaolin)

The turbidity of supernatant liquid after a flocculation treatment was measured by a spectrophotometer (wavelength: 660 nm, cell length: 10 mm) in accordance with JIS K0101.

### 2) Measurement of pH

The pH was measured by TOA-HM35V (product of TOA D.K.K. Kougyo Co., Ltd.)

### Production Examples 1 to 3 and Comparative Production Examples 1 and 2

Commercially available sodium silicate and sulfuric acid were diluted with water to prepare diluted sodium silicate (SiO₂: 257.1 g/L, Na₂O: 83.2, MR: 3.19) and diluted sulfuric acid (H₂SO₄: 197.3 g/L). They are caused to collide with each other at a sodium silicate flow volume of 6.59 L/min, a sodium silicate flow rate of 15.6 m/sec (nozzle diameter: 3.0 mm), a diluted sulfuric acid flow volume of 5.05 L/min and a diluted sulfuric acid flow rate of 13.7 m/sec (nozzle diameter: 2.8 mm) by use of a Y-shaped collision reactor having a size of 40 mm x 40 mm to react with each other and allowed to react for 13 minutes at a flow rate upon discharge of 2.5 m/sec to give 151 L of silica sol (SiO₂: 145 g/L). Then, after this silica sol was aged without agitation until the viscosity of the sol reached 12 mPa·s, the sol was diluted with 1,392 L of water to produce diluted silica sol having an SiO₂ concentration of 14 g/L. This silica sol had a pH of 1.92 and a viscosity of 3.8 mPa·s.

A portion of this diluted silica sol was directly added to a papermaking process and used as a retention aid for improving a papermaking productivity. The result is shown in Example 12.

Further, a portion of the diluted silica sol was mixed with aluminum sulfate and used as a silica-aluminum based inorganic polymer flocculant for papermaking waste water.

The silica-aluminum based inorganic polymer flocculants with different molar ratios were produced under the conditions shown in Table 1. The concentration of Al₂O₃ in the sulfuric acid band used was 106 g/L.

**Table 1**

| | Amount of Diluted Silica Sol (L) | Amount of Aluminum Sulfate (L) | Silica-Aluminum Based Inorganic Polymer Flocculant | | | |
|---|---|---|---|---|---|---|
| | | | Si/Al (Molar Ratio) | SiO₂ Concentration (g/L) | pH | Al Concentration (g/L) |
| P.Ex.1 | 1 | 0.22 | 0.5 | 17.3 | 1.97 | 15.2 |
| P.Ex.2 | 1 | 0.11 | 1.0 | 16.6 | 1.95 | 8.3 |
| P.Ex.3 | 1 | 0.80 | 0.26 | 14.4 | 2.26 | 24.4 |
| C.P.Ex.1 | 1 | 1.25 | 0.09 | 4.40 | 2.01 | 21.2 |
| C.P.Ex.2 | 1 | 0.04 | 3.0 | 19.3 | 1.94 | 2.9 |

| | | | | | | |
|---|---|---|---|---|---|---|
| P.Ex.: Production Example, C.P.Ex.: Comparative Production Example | | | | | | |

### Example 1

500 ml of papermaking waste water (turbidity: 99.17, pH: 12.54, COD concentration: 84.5 ppm) discharged from a papermaking process was collected in a 500-ml beaker, and with the waste water under agitation at an agitation rate of 150 rpm, diluted sulfuric acid (H₂SO₄: 30 g/100 ml) was added to adjust the pH of the waste water to 5.63. Then, 0.07 ml (2 mg-Al/L) of solution of the silica-aluminum based inorganic polymer flocculant of Production Example 1 having an Si/Al molar ratio of 0.5 (Al: 1.52 g/100 ml) was added to the above solution and agitated for 5 minutes. The pH of the waste water to be treated at that time was 5.40. Then, 0.3 ml (corresponding to 1 mg/L of the following polymer flocculant) of 0.2% polyacrylamide based anionic polymer flocculant KURIFLOCK PA362 (commercial product of Kurita Water Industries Ltd.) was added thereto, agitated at an agitation rate of 40 rpm for 5 minutes and left to stand for 10 minutes, and supernatant liquid after the flocculation treatment was sampled and measured for turbidity and COD concentration. According to the analysis of the supernatant liquid, the turbidity was 1.83, and the COD concentration was 38.6 ppm. Further, when 60 ml of the above supernatant liquid was filtered by use of filter paper having openings of 1 µm in diameter and the weight of the residue on the filter paper was measured, it was not higher than 10 ppm. The results are shown in Table 2.

### Example 2

The procedure of Example 1 was repeated except that 2,000 ml of activated sludge treated waste water (turbidity: 115.9, pH: 12.19) resulting from treating recycled pulp manufacturing waste water or mechanical pulp manufacturing waste water with activated sludge was collected in a 2, 000-ml beaker and 18.4 ml (140 mg-Al/L) of the silica-aluminum based inorganic polymer flocculant of Production Example 1 having an Si/Al molar ratio of 0.5 (Al: 1.52 g/100 ml) was added to the waste water, without adjusting the pH of the waste water by diluted sulfuric acid, so as to adjust the pH of the waste water to be treated to 6.02 and that the amount of KURIFLOCK PA362 was changed to 1.6 ml. When the obtained supernatant liquid was analyzed, its turbidity was 0.46 and its COD concentration was 60.4 ppm. Further, when the weight of the residue in the supernatant liquid was measured as in Example 1, it was not higher than 10 ppm. The results are shown in Table 2.

### Example 3

The procedure of Example 1 was repeated except that 2 , 000 ml of KP waste water (turbidity: 519, pH: 11.09) discharged in the kraft pulp manufacturing process was collected in a 2,000-ml beaker and 26.3 ml (200 mg-Al/L) of the silica-aluminum based inorganic polymer flocculant of Production Example 1 having an Si/Al molar ratio of 0.5 (Al: 1.52 g/100 ml) was added to the waste water, without adjusting the pH of the waste water by diluted sulfuric acid, so as to adjust the pH of the waste water to be treated to 5.07 and that the amount of KURIFLOCK PA362 was changed to 1.6 ml. When the obtained supernatant liquid was analyzed, its turbidity was 1.03 and its COD concentration was 131 ppm. Further, when the weight of the residue in the supernatant liquid was measured as in Example 1, it was not higher than 10 ppm. The results are shown in Table 2.

### Example 4

The procedure of Example 1 was repeated except that 2,000 ml of clarifier treated waste water (turbidity: 20, SS concentration: 25 ppm, COD concentration: 57.1, pH: 6.59) which is the supernatant liquid of activated sludge treated waste water was collected in a 2,000-ml beaker and 0.4 ml (3 mg-Al/L) of the silica-aluminum based inorganic polymer flocculant of Production Example 1 having an Si/Al molar ratio of 0. 5 (Al: 1. 52 g/100 ml) was added to the waste water, without adjusting the pH of the waste water by diluted sulfuric acid, so as to adjust the pH of the clarifier treated waste water to 5.93 and that the amount of KURIFLOCK PA362 was changed to 1.6 ml. When the obtained supernatant liquid was analyzed, its turbidity was 2.29 and its COD concentration was 41.3 ppm. Further, when the weight of the residue in the supernatant liquid was measured as in Example 1, it was not higher than 10 ppm. The results are shown in Table 2.

### Example 5

The procedure of Example 1 was repeated except that 1,000 ml of bleaching waste water (turbidity: 110, pH: 1.82) discharged at the time of bleaching was collected in a 1,000-ml beaker, the pH of the waste water was adjusted to 11.92 by lime milk (CaO: 11.8 g/100 ml), and 25 ml (100 mg-Al/L) of silica-aluminum based inorganic polymer flocculant having an Si/Al molar ratio of 0.5 (Al: 0.4 g/100 ml) obtained by diluting the flocculant of Production Example 1 was added to the waste water to adjust the pH of the waste water to 6.20 and that the amount of KURIFLOCK PA362 was changed to 0.9 ml. When the obtained supernatant liquid was analyzed, its turbidity was 3.39. The results are shown in Table 2.

### Example 6

The procedure of Example 1 was repeated except that 300 ml of coating waste water (turbidity: 128, pH: 6.46) discharged in the coating process was collected in a 300-ml beaker and 15 ml (200 mg-Al/L) of silica-aluminum based inorganic polymer flocculant having an Si/Al molar ratio of 0.5 (Al: 0.4 g/100 ml) obtained by diluting the flocculant of Production Example 1 was added to the waste water, without adjusting the pH of the waste water in advance, so as to adjust the pH of the waste water to 5.93 and that the amount of KURIFLOCK PA362 was changed to 0.3 ml. When the obtained supernatant liquid was analyzed, its turbidity was 4.39. The results are shown in Table 2.

### Example 7

The procedure of Example 6 was repeated except that the pH of the waste water to be treated was adjusted to 5.94 by adding 7.23 ml (200 mg-Al/L) of the silica-aluminum based inorganic polymer flocculant of Production Example 2 having an Si/Al molar ratio of 1.0 (Al: 0.83 g/100 ml). When the obtained supernatant liquid was analyzed, its turbidity was 5.59. The results are shown in Table 2.

### Example 8

The procedure of Example 1 was repeated except that to treat papermaking waste water whose pH had been adjusted to 5.57 by diluted sulfuric acid, 0.3 ml (corresponding to 1 mg/L of the following polymer flocculant) of 0.2% polyacrylamide based nonionic polymer flocculant PN161 (product of Kurita Water Industries Ltd.) was added in place of the anionic polymer flocculant. The turbidity of the obtained supernatant liquid was 1.63. The results are shown in Table 2.

### Example 9

The procedure of Example 1 was repeated except that to treat papermaking waste water whose pH had been adjusted to 5.81 by diluted sulfuric acid, 0.06 ml (3 mg-Al/L) of the silica-aluminum based inorganic polymer flocculant of Production Example 3 having an Si/Al molar ratio of 0.26 (Al: 2.44 g/100 ml) was added in place of the silica-aluminum based inorganic polymer flocculant of Production Example 1 and 0.5 ml (corresponding to 2 mg/L) of 0.2% nonionic polymer flocculant PN161 (product of Kurita Water Industries Ltd.) was also added. The turbidity of the obtained supernatant liquid was 1.21. The results are shown in Table 2.

### Comparative Example 1

The procedure of Example 6 was repeated except that the amount of aluminum sulfate (Al: 5.64 g/100 ml) was changed to 1.06 ml (200 mg-Al/L) and the amount of KURIFLOCK PA362 was changed to 0.3 ml. The turbidity of the obtained supernatant liquid was 18.74. The results are shown in Table 2.

### Comparative Example 2

The procedure of Example 6 was repeated except that the pH of the waste water to be treated was adjusted to 5.95 by adding 2.83 ml (200 mg-Al/L) of the silica-aluminum based inorganic polymer flocculant of Comparative Production Example 1 having an Si/Al molar ratio of 0.09 (Al: 2.12 g/100 ml) and that the amount of KURIFLOCK PA362 was changed to 0.3 ml. When the obtained supernatant liquid was analyzed, its turbidity was 10.53. The results are shown in Table 2.

### Comparative Example 3

The procedure of Example 6 was repeated except that the pH of the waste water to be treated was adjusted to 5.98 by adding 20.69 ml (200 mg-Al/L) of the silica-aluminum based inorganic polymer flocculant of Comparative Production Example 2 having an Si/Al molar ratio of 3.0 (Al: 0.29 g/100 ml) and that the amount of KURIFLOCK PA362 was changed to 0.3 ml. When the obtained supernatant liquid was analyzed, its turbidity was 20.40. The results are shown in Table 2.

### Comparative Example 4

The procedure of Example 1 was repeated except that the pH was adjusted to 4.5 by diluted sulfuric acid. The pH of the waste water to be treated after the silica-aluminum based inorganic flocculant was added was 4.40. When the obtained supernatant liquid was analyzed, its turbidity was 10.3 and the weight of the residue was 14 ppm. The results are shown in Table 2.

### Comparative Example 5

The procedure of Example 1 was repeated except that the pH was adjusted to 9.5 by diluted sulfuric acid. The pH of the waste water to be treated after the silica-aluminum based inorganic flocculant was added was 9.20. When the obtained supernatant liquid was analyzed, its turbidity was 16.20 and the weight of the residue was 31 ppm. The results are shown in Table 2.

### Comparative Example 6

The procedure of Example 1 was repeated except that 0.03 ml (corresponding to 0.85 mg-Al/L) of the silica-aluminum based inorganic polymer flocculant of Production Example 1 was added to adjust the pH of the waste water to be treated to 5.58. When the obtained supernatant liquid was analyzed, its turbidity was 15.60 and the weight of the residue was 27 ppm. The results are shown in Table 2.

### Example 10

The procedure of Comparative Example 4 was repeated except that after the silica-aluminum based inorganic polymer flocculant was added to the waste water to be treated to adjust its pH to 4.40, 0.4 ml of 1N NaOH was also added to the waste water to adjust its pH to 7.22. When the obtained supernatant liquid was analyzed, its turbidity was 1.53 and the weight of the residue was not higher than 10 ppm. The results are shown in Table 3.

### Example 11

The procedure of Comparative Example 5 was repeated except that after the silica-aluminum based inorganic polymer flocculant was added to the waste water to be treated to adjust its pH to 9.20, diluted sulfuric acid was also added to the waste water to adjust its pH to 7.34. When the obtained supernatant liquid was analyzed, its turbidity was 1.91 and the weight of the residue was not higher than 10 ppm. The results are shown in Table 3.

**Table 2**

| | Papermaking Waste Water to Be Treated | | pH of Papermaking Waste Water or pH-adjusted Papermaking Waste Water | Silica-Aluminum Based Inorganic Polymer Flocculant | | pH of Waste Water to Be Treated after Addition of Inorganic Polymer Flocculant | Addition Concentration of Organic Polymer Flocculant (mg/L) | Turbidity of Treatment Water |
|---|---|---|---|---|---|---|---|---|
| | Kind | pH | | Kind | Additive Rate (mg-Al/L) | | | |
| Ex.1 | Papermaking | 12.54 | 5.63 | Production Example 1 | 2 | 5.40 | 1 | 1.83 |
| Ex.2 | Activated Sludge Treated | 12.19 | 12.19 | Production Example 1 | 140 | 6.02 | 1.6 | 0.46 |
| Ex.3 | KP | 11.09 | 11.09 | Production Example 1 | 200 | 5.07 | 1.6 | 1.03 |
| Ex.4 | Clarifier | 6.59 | 6.59 | Production Example 1 | 3 | 5.93 | 1.6 | 2.29 |
| Ex.5 | Bleaching | 1.82 | 11.92 | Production Example 1 | 100 | 6.20 | 1.8 | 3.39 |
| Ex.6 | Coating | 6.46 | 6.46 | Production Examples 1 | 200 | 5.93 | 2 | 4.39 |
| Ex.7 | Coating | 6.46 | 6.46 | Production Example 2 | 200 | 5.94 | 2 | 5.59 |
| Ex.8 | Papermaking | 12.54 | 5.57 | Production Example 1 | 2 | 5.21 | 1 | 1.63 |
| Ex.9 | Papermaking | 12.54 | 5.81 | Production Example 3 | 3 | 5.45 | 2 | 1.21 |
| C.Ex.1 | Coating | 6.46 | 6.46 | Aluminum Sulfate | 200 | 5.94 | 2 | 18.74 |
| C.Ex.2 | Coating | 6.46 | 6.46 | Comparative Production Example 1 | 200 | 5.95 | 2 | 10.53 |
| C.Ex.3 | Coating | 6.46 | 6.46 | Comparative Production Example 2 | 200 | 5.98 | 2 | 20.40 |
| C.Ex.4 | Papermaking | 12.54 | 4.50 | Production Example 1 | 2 | 4.40 | 1 | 10.30 |
| C.Ex.5 | Papermaking | 12.54 | 9.50 | Production Example 1 | 2 | 9.20 | 1 | 16.20 |
| C.Ex.6 | Papermaking | 12.54 | 5.63 | Production Example 1 | 0.85 | 5.58 | 1 | 15.60 |

| | | | | | | | | |
|---|---|---|---|---|---|---|---|---|
| C.Ex.: Comparative Example | | | | | | | | |

**Table 3**

| | Papermaking Waste Water to Be Treated | | pH of Papermaking Waste Water or pH-adjusted Papermaking Waste Water | Silica-Aluminum Based Inorganic Polymer Flocculant | | pH after Addition of Inorganic Polymer Flocculant | pH of pH-Controlled Waste water to Be Treated | Addition Concentration of Organic Polymer Flocculant (mg/L) | Turbidity of Treatment Water |
|---|---|---|---|---|---|---|---|---|---|
| | Kind | pH | | Kind | Additive Rate (mg-Al/L) | | | | |
| Ex.10 | Papermaking | 12.54 | 4.50 | Production Example 1 | 2 | 4.40 | 7.22 | 1 | 1.53 |
| Ex.11 | Papermaking | 12.54 | 9.50 | Production Example 1 | 2 | 9.20 | 7.34 | 1 | 1.91 |

| | | | | | | | | | |
|---|---|---|---|---|---|---|---|---|---|
| Ex.: Example | | | | | | | | | |

### Example 12

The silica sol having a pH of 1.92 and a viscosity of 3.8 mPa·s described in the Production Examples was used as a retention aid under the following conditions. Mixed pulp comprising hardwood bleached kraft pulp and softwood bleached kraft pulp in a ratio of 90/10 was beaten in Canadian Standard Fouriness 400. To 100 parts of the obtained pulp slurry, 10 parts of calcium carbonate, 0.5 parts of aluminum sulfate, 0.1 parts of alkyl ketene dimer based sizing agent (product of Seiko PMC Corporation, trade name "AS263"), and 1 part of amphoteric starch were added sequentially. Then, 0.03 parts of the above silica sol was added and dispersed uniformly to prepare papermaking raw material slurry. The papermaking raw material slurry had a pH of 8.0. The obtained papermaking raw material slurry was processed into paper by use of a tappi standard sheet machine so as to achieve a basis weight of 65 g/m², and the obtained wet paper was dewatered by compression and dried at 100°C for 80 seconds. The thus obtained neutral paper was conditioned at 23°C and a relative humidity of 50% for 24 hours, and the content of calcium carbonate was measured. Further, the transmittance of white water at the time papermaking was measured. The content of calcium carbonate was 8.7%, and the transmittance of the white water was 91.2%. It was confirmed that a large quantity of calcium carbonate was used, the transmittance of the white water was high and the silica sol exerts an excellent effect as a retention aid.

As described above, since the method for treating papermaking waste water according to the present invention can provide treatment water which shows a turbidity of 8 or less after a flocculated precipitate is removed, the treatment water can be recycled.

Further, the flocculated precipitate can be recycled as a valuable resource which is effectively used as a raw material and fuel for cement or for bioelectric power generation. Accordingly, environmental burdens can be reduced.

Further, in the present invention, by producing a silica-aluminum based inorganic polymer flocculant from silica sol, silica sol which is used in both a retention aid used in paper manufacturing and a flocculant used in treatment of papermaking waste water can be produced in the same process, thereby making effective use of equipment possible.

## Claims

1. A method for treating papermaking waste water, which comprises having a silica-aluminum based inorganic polymer flocculant having an Si/Al molar ratio of 0.2 to 1.5 contained in papermaking waste water having a pH or adjusted pH of 5 to 14 such that the concentration of the inorganic polymer flocculant becomes 1 to 250 (mg-Al/L) in terms of aluminum to control the pH of the papermaking waste water to 5 to 8 and then adding an organic polymer flocculant.

2. The method of claim 1, wherein the pH of the papermaking waste water is controlled to 5 to 8 by merely adding the silica-aluminum based inorganic polymer flocculant.

3. The method of claim 1 or 2, wherein the silica-aluminum based inorganic polymer flocculant has a pH of 1.5 to 2.5 and an SiO₂ concentration of 5 to 25 g/L.

4. A method of using silica sol which uses silica sol produced by reacting a sodium silicate solution with a halogen-free mineral acid as a retention aid and uses a silica-aluminum based inorganic polymer flocculant produced by adding aluminum sulfate to the silica sol and having an Si/Al molar ratio of 0.2 to 1. 5 as a flocculant for papermaking waste water.

5. The method of claim 4, wherein the silica-aluminum based inorganic polymer flocculant has a pH of 1.5 to 2.5 and an SiO₂ concentration of 5 to 25 g/L.

## Patentansprüche

1. Verfahren zur Behandlung von Abwasser aus der Papierherstellung, das Aufweisen eines Silica-Aluminium-basierten anorganischen Polymer-Flockungsmittels mit einem Si/Al-Molverhältnis von 0,2 bis 1,5, das im Abwasser der Papierherstellung, welches einen pH oder einen eingestellten pH von 5 bis 14 hat, enthalten ist, derart, dass die Konzentration des anorganischen Polymer-Flockungsmittels 1 bis 250 (mg Al/L) als Aluminiumwert wird, um den pH des Abwassers der Papierherstellung auf 5 bis 8 zu regulieren, und danach Zusetzen eines organischen Polymer-Flockungsmittels umfasst.

2. Verfahren gemäß Anspruch 1, wobei der pH des Abwassers der Papierherstellung auf 5 bis 8 reguliert wird, indem lediglich das anorganische Polymer-Flockungsmittel auf Silica-Aluminium-Basis zugesetzt wird.

3. Verfahren gemäß Anspruch 1 oder 2, wobei das anorganische Polymer-Flockungsmittel auf Silica-Aluminium-Basis einen pH von 1,5 bis 2,5 und eine SiO₂-Konzentration von 5 bis 25 g/L hat.

4. Verfahren der Verwendung von Silicasol, das Silicasol verwendet, das durch Umsetzen einer Natriumsilikatlösung mit einer halogenfreien Mineralsäure als Retentionshilfsmittel hergestellt wurde, und ein anorganisches Polymer-Flockungsmittel auf Silica-Aluminium-Basis verwendet, das durch Zugeben von Aluminiumsilikat zu dem Silicasol hergestellt wurde, und das ein Si/Al-Molverhältnis von 0,2 bis 1,5 hat, als Flockungsmittel für Abwasser der Papierherstellung.

5. Verfahren gemäß Anspruch 4, wobei das anorganische Polymer-Flockungsmittel auf Silica-Aluminium-Basis einen pH von 1,5 bis 2,5 und eine SiO₂-Konzentration von 5 bis 25 g/L hat.

## Revendications

1. Procédé de traitement des eaux usées de fabrication de papier, dans lequel un floculant polymérique inorganique à base de silice-aluminium ayant un rapport Si/Al de 0,2 à 1,5 est contenu dans des eaux usées de fabrication de papier ayant un pH ou un pH ajusté dans la gamme allant de 5 à 14 de telle manière que la concentration du floculant polymérique inorganique devienne de 1 à 250 (mg - Al/l) exprimé en aluminium pour contrôler le pH des eaux usées de fabrication de papier dans la gamme allant de 5 à 8 et après un floculant polymérique organique est ajouté.

2. Procédé selon la revendication 1, dans lequel le pH des eaux usées de fabrication de papier est contrôlé dans la gamme de 5 à 8 seulement par l'addition du floculant polymérique anorganique à base de silice-aluminium.

3. Procédé selon la revendication 1 ou 2, dans lequel le floculant polymérique anorganique à base de silice-aluminium a un pH de 1,5 à 2,5 et une concentration en SiO₂ de 5 à 25 g/l.

4. Procédé d'utilisation d'un sol de silice ledit procédé utilise un sol de silice produit par réaction d'une solution de silicate de sodium avec un acide minéral sans halogène en tant qu'agent de rétention et utilise un floculant polymérique inorganique à base de silice-aluminium produit par addition de sulfate d'aluminium au sol de silice et ayant un rapport Si/Al de 0,2 à 1,5 en tant que floculant pour des eaux usées de fabrication de papier.

5. Procédé selon la revendication 4, dans lequel le floculant polymérique inorganique à base de silice-aluminium a un pH de 1,5 à 2,5 et une concentration en SiO₂ de 5 à 25 g/l.
